(19) Europäisches Patentamt / European Patent Office / Office européen des brevets

(11) **EP 2 717 070 A2**

(12) # EUROPEAN PATENT APPLICATION
published in accordance with Art. 153(4) EPC

(43) Date of publication:
**09.04.2014 Bulletin 2014/15**

(21) Application number: **12788721.4**

(22) Date of filing: **28.03.2012**

(51) Int Cl.:
**G01S 19/13** $^{(2010.01)}$

(86) International application number:
**PCT/KR2012/002263**

(87) International publication number:
**WO 2012/161416 (29.11.2012 Gazette 2012/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2011 KR 20110049048**
**12.03.2012 KR 20120025006**

(71) Applicant: **Lee, Heung Soo**
**Seoul 153-035 (KR)**

(72) Inventor: **Lee, Heung Soo**
**Seoul 153-035 (KR)**

(74) Representative: **Mounteney, Simon James**
**Marks & Clerk LLP**
**90 Long Acre**
**London**
**WC2E 9RA (GB)**

(54) **METHOD FOR CALCULATING THE POSITION OF A GPS RECEIVER, RECORDING MEDIUM FOR STORING A PROGRAM IMPLEMENTING THE METHOD, AND GPS RECEIVER**

(57) A method of calculating a position of a GPS receiver, a recording medium having recorded thereon a program for performing the method, and a GPS receiver are provided. The method of calculating a position of a GPS receiver includes the steps of causing a control unit to combine a plurality of satellite signals received through the use of a receiver unit and to create a plurality of satellite signal groups; selecting a low-error satellite signal group not including any GPS satellite signal causing a reflection error or including the GPS satellite signal causing a reflection error as little as possible by the use of pseudoranges based on the GPS satellite signals included in the satellite signal groups; detecting the GPS satellite signal not included in the low-error satellite signal group as a reflected satellite signal; and calculating a positional coordinate of the GPS receiver by the use of the GPS satellite signals other than the reflected satellite signal. As a result, by excluding the GPS satellite causing a reflection error to remove the reflection error, it is possible to more accurately calculate the current position of the GPS receiver.

EP 2 717 070 A2

**Description**

BACKGROUND

Technical Field

The present invention relates to a method of calculating the position of a GPS receiver, a recording medium having recorded thereon a program for performing the method, and a GPS receiver.

Related Art

A GPS (Global Positioning System) becomes more important with the rapid diffusion of electronic systems and multimedia in a high-level information-oriented society of 21 C and is an integrated technical field which can be realized through the fusion of various techniques such as electricity, electronics, and communications. Presently, a GPS technique is mainly utilized for a positioning system used for automatic navigation systems and relevant industries and markets thereof are continuously extended.
Satellite signals of the GPS which is a navigation system using electric waves include various error components based on ionospheric delay, tropospheric delay, receiver clock bias, thermal noise, reflection, and the like.
In order to reduce the influence from the error components included in the satellite signals, to correct position errors, and to enhance positioning accuracy, a DGPS (Differential Global Positioning System) which is a relative positioning system is used. KR-A-2011-0041211 discloses a GPS module which raises a position resolution by correcting position errors using the DGPS and a DGPS receiver using the GPS module.
The error components based on ionospheric delay, tropospheric delay, receiver clock bias, and thermal noise can be considerably reduced by the using the DGPS. However, the error based on reflection (hereinafter, referred to as reflection error) is different in characteristics from the other error factors and thus the reflection error cannot be removed using the DGPS according to the related art.

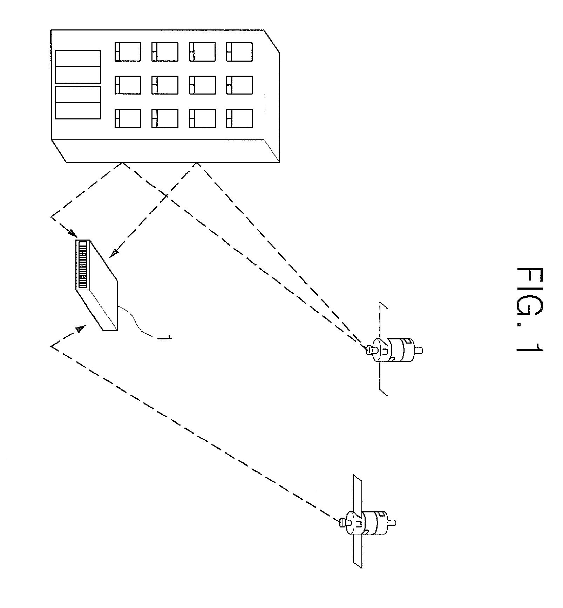

Fig. 1 is a diagram illustrating a situation where a reflection error is caused.
Referring to Fig. 1, the reflection error is a position error generated because a satellite signal transmitted from an artificial satellite is reflected by surrounding buildings or the earth surface and is then input to a GPS receiver 1.
Particularly, in the downtown having many high buildings, a GPS satellite signal does not pass through the buildings. In the case of roads having buildings arranged on both sides thereof, GPS signals seems to be received from both sides thereof, but the GPS satellite signals reflected by the opposite buildings may be actually received.
The intensity of a GPS satellite signal reflected by a building is hardly distinguished from that of a non-reflected GPS satellite signal. This is because the intensity of the reflected GPS satellite signal should be theoretically reduced, but the distance from a GPS satellite varies depending on the arrangement and the GPS satellite signal from a GPS satellite greatly apart therefrom is small in signal intensity.
As the downtown has higher buildings and wider roads, the reflection error becomes greater and generally has a magnitude corresponding to the width of a road. There is a problem in that the generation position or time of the reflection error and the magnitude of the reflection error cannot be predicted.
It is necessary to remove such reflection error. Examples of the method of removing the reflection error include an adaptive antenna array method, but there is a problem in that plural antennas should be used which it is difficult to apply to mobile devices.

SUMMARY

An advantage of some aspects of the invention is that it provides a method of calculating a position of a GPS receiver, which can more accurately calculate the current position of a GPS receiver by excluding a GPS satellite causing the reflection error from the position calculation to remove the reflection error, a recording medium having recorded thereon a program for performing the method, and a GPS receiver.
Another advantage of some aspects of the invention is that it provides a method of calculating a position of a GPS receiver, which can measure the accurate position of the GPS receiver by combining GPS satellite signals into plural satellite signal groups and searching for a positional coordinate not including a reflection error out of positional coordinates of the satellite groups, a recording medium having recorded thereon a program for performing the method, and a GPS receiver.
Other advantages of the invention will be easily understood from the following description.
According to aspects of the invention, there are provided a method of calculating a position of a GPS receiver and a program having recorded thereon a program for performing the method.
According to an aspect of the invention, there is provided a method of calculating a position of a GPS receiver, including the steps of: causing a control unit to combine a plurality of satellite signals received through the use of a receiver unit and to create a plurality of satellite signal groups; selecting a low-error satellite signal group not including any GPS satellite signal causing a reflection error or including the GPS satellite signal causing a reflection error as little as possible by the use of pseudoranges based on the GPS satellite signals included in the satellite signal groups; detecting the GPS satellite signal not included in the low-error satellite signal group as a reflected satellite signal; and calculating a positional coordinate of the GPS receiver by the use of the GPS satellite signals other than the reflected satellite signal.

The step of creating a plurality of satellite signal groups may include creating $_kC_m$ satellite signal groups by combining m GPS satellite signals into a signal satellite signal group when k GPS satellite signals are received, where m is an integer equal to or greater than 4 and k is an integer greater than m.

The step of creating a plurality of satellite signal groups may include combining the plurality of GPS satellite signals so as to create satellite signal groups having a relatively low DOP (Dilution Of Precision).

The step of selecting a low-error satellite signal group may include selecting the low-error satellite signal group on the basis of a calculation result of a pseudorange-relevant variable including at least one of a predicted positional coordinate of the GPS receiver, a residual of the pseudoranges, a correction value, and a deviation between the pseudorange and a geometric distance which are calculated using the pseudoranges.

When the pseudorange-relevant variable is the predicted positional coordinate, the step of selecting a low-error satellite signal group may include calculating the predicted positional coordinate for each of the satellite signal groups using the pseudoranges based on the GPS satellite signals included in the corresponding satellite signal group and selecting the satellite signal group corresponding to the predicted positional coordinate quite different from the other predicted positional coordinates as the low-error satellite signal group.

The step of selecting a low-error satellite signal group may include calculating an average coordinate of the predicted positional coordinates corresponding to the satellite signal groups and selecting the satellite signal group having the predicted positional coordinate of which the deviation from the average coordinate is equal to or greater than a reference value as the low-error satellite signal group.

When the pseudorange-relevant variable is the deviation between the pseudorange and the geometric distance, the step of selecting a low-error satellite signal group may include calculating a representative value of a distance deviation for the GPS satellite signals included in each satellite signal group and selecting the satellite signal group of which the representative value of the distance deviations is the minimum as the low-error satellite signal group.

When a plurality of GPS satellite signals including the reflection error are present, the step of selecting a low-error satellite signal group may include selecting a plurality of low-error satellite signal groups at a time, and the step of detecting the reflected satellite signal includes detecting a plurality of GPS satellite signals not included in the plurality of low-error signal groups as the reflected satellite signal.

According to another aspect of the invention, there is provided a method of calculating a position of a GPS receiver, including the steps of: causing a control unit to combine a plurality of satellite signals received through the use of a receiver unit and to create a plurality of satellite signal groups; selecting a low-error satellite signal group not including any GPS satellite signal causing a reflection error by the use of pseudoranges based on the GPS satellite signals included in the satellite signal groups; and calculating a predicted positional coordinate calculated on the basis of the low-error satellite signal group as a positional coordinate of the GPS receiver.

The step of selecting a low-error satellite signal group may include calculating the predicted positional coordinate for each of the satellite signal groups using the pseudoranges based on the GPS satellite signals included in the corresponding satellite signal group and selecting the satellite signal group corresponding to the predicted positional coordinate quite different from the other predicted positional coordinates as the low-error satellite signal group.

The step of selecting a low-error satellite signal group may include calculating an average coordinate of the predicted positional coordinates corresponding to the satellite signal groups and selecting the satellite signal group having the predicted positional coordinate of which the deviation from the average coordinate is equal to or greater than a reference value as the low-error satellite signal group.

According to still another aspect of the invention, there is provided a GPS receiver including: a combination unit that combines a plurality of GPS satellite signals received through the use of a receiver unit and that creates a plurality of satellite signal groups; a satellite signal group selecting unit that selects a low-error satellite signal group not including any GPS satellite signal causing a reflection error or including the GPS satellite signals as little as possible using pseudoranges based on the GPS satellite signals included in each of the satellite signal groups; a satellite signal detecting unit that detects the GPS satellite signal not included in the low-error satellite signal group as a reflected satellite signal; and a position calculating unit that calculates a positional coordinate of the GPS receiver using the GPS satellite signals other than the reflected satellite signal.

The combination unit may create $_kC_m$ satellite signal groups by combining m GPS satellite signals into a signal satellite signal group when k GPS satellite signals are received, where m is an integer equal to or greater than 4 and k is an integer greater than m.

3

The combination unit may combine the plurality of GPS satellite signals so as to create satellite signal groups having a relatively low DOP (Dilution Of Precision).

The satellite signal group selecting unit may select the low-error satellite signal group on the basis of a calculation result of a pseudorange-relevant variable including at least one of a predicted positional coordinate of the GPS receiver, a residual of the pseudoranges, a correction value, and a deviation between the pseudorange and a geometric distance which are calculated using the pseudoranges.

When the pseudorange-relevant variable is the predicted positional coordinate, the satellite signal group selecting unit may calculate the predicted positional coordinate for each of the satellite signal groups using the pseudoranges based on the GPS satellite signals included in the corresponding satellite signal group and may select the satellite signal group corresponding to the predicted positional coordinate quite different from the other predicted positional coordinates as the low-error satellite signal group.

The satellite signal group selecting unit may calculate an average coordinate of the predicted positional coordinates corresponding to the satellite signal groups and may select the satellite signal group having the predicted positional coordinate of which the deviation from the average coordinate is equal to or greater than a reference value as the low-error satellite signal group.

When the pseudorange-relevant variable is the deviation between the pseudorange and the geometric distance, the satellite signal group selecting unit may calculate a representative value of a distance deviation for the GPS satellite signals included in each satellite signal group and may select the satellite signal group of which the representative value of the distance deviations is the minimum as the low-error satellite signal group.

When a plurality of GPS satellite signals including the reflection error are present, the satellite signal group selecting unit may select a plurality of low-error satellite signal groups at a time and the satellite signal detecting unit may detect a plurality of GPS satellite signals not included in the plurality of low-error signal groups as the reflected satellite signal.

According to still another aspect of the invention, there is provided a GPS receiver including: a combination unit that combines a plurality of satellite signals received through the use of a receiver unit and that creates a plurality of satellite signal groups; a satellite signal group selecting unit that selects a low-error satellite signal group not including any GPS satellite signal causing a reflection error by the use of pseudoranges based on the GPS satellite signals included in the satellite signal groups; and a position calculating unit that calculates a predicted positional coordinate calculated on the basis of the low-error satellite signal group as a positional coordinate of the GPS receiver.

The satellite signal group selecting unit may calculate the predicted positional coordinate for each of the satellite signal groups using the pseudoranges based on the GPS satellite signals included in the corresponding satellite signal group and may select the satellite signal group corresponding to the predicted positional coordinate quite different from the other predicted positional coordinates as the low-error satellite signal group.

The satellite signal group selecting unit may calculate an average coordinate of the predicted positional coordinates corresponding to the satellite signal groups and may select the satellite signal group having the predicted positional coordinate of which the deviation from the average coordinate is equal to or greater than a reference value as the low-error satellite signal group.

Other aspects, features, and advantages of the invention will become apparent from the accompanying drawings, the appended claims, and the detailed description.

According to exemplary embodiments of the invention, it is possible to more accurately calculate the current position of a GPS receiver by excluding a GPS satellite causing the reflection error from the position calculation to remove the reflection error.

It is also possible to measure the accurate position of the GPS receiver by combining GPS satellite signals into plural satellite signal groups and searching for a positional coordinate not including a reflection error out of positional coordinates of the satellite groups.

BRIEF DESCRIPTION OF THE DRAWINGS

Fig. 1 is a diagram illustrating a situation where a reflection error is caused.
Fig. 2 is a diagram illustrating the constitution of a GPS receiver according to an embodiment of the invention.
Fig. 3 is a flowchart illustrating a method of calculating a position of a GPS receiver according to another embodiment of the invention.
Fig. 4 is a diagram illustrating an error in position calculation based on a reflection error.
Fig. 5 is a block diagram schematically illustrating the constitution of a control unit of the GPS receiver according to another embodiment of the invention.

## DESCRIPTION OF EXEMPLARY EMBODIMENTS OF THE INVENTION

The invention can be modified in various forms and specific embodiments will be described and shown below. However, the embodiments are not intended to limit the invention, but it should be understood that the invention includes all the modifications, equivalents, and replacements belonging to the concept and the technical scope of the invention. When it is determined that specific description of known techniques associated with the description of the invention makes the concept of the invention vague, the detailed description thereof will not be made.

Terms "first" and "second" can be used to describe various elements, but the elements should not be limited to the terms. The terms are used only to distinguish an element from another.

The terms used in the following description are intended to merely describe specific embodiments, but not intended to limit the invention. An expression of the singular number includes an expression of the plural number, so long as it is clearly read differently. The terms such as "include" and "have" are intended to indicate that features, numbers, steps, operations, elements, components, or combinations thereof used in the following description exist and it should thus be understood that the possibility of existence or addition of one or more other different features, numbers, steps, operations, elements, components, or combinations thereof is not excluded.

The term "unit" described in the specification means a unit for performing at least one function or operation and can be embodied by hardware, by software, or by a combination of hardware and software.

Hereinafter, exemplary embodiments of the invention will be described in detail with reference to the accompanying drawings. In describing the invention with reference to the accompanying drawings, like elements are referenced by like reference numerals or signs regardless of the drawing numbers and description thereof is not repeated.

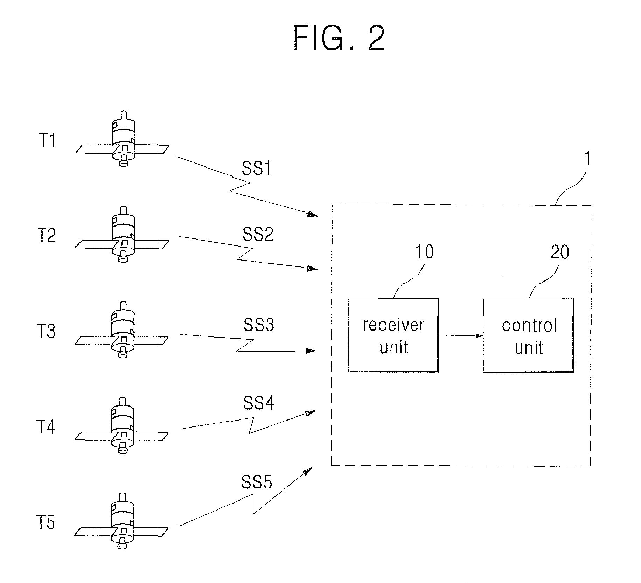

Fig. 2 is a diagram illustrating the constitution of a GPS receiver according to an embodiment of the invention.

Referring to Fig. 2, a GPS receiver 1 includes a receiver unit 10 and a control unit 20.

The receiver unit 10 receives GPS satellite signals SS1 to SS5 sent from plural GPS satellites T1 to T5 and sends the received GPS satellite signals to the control unit 20.

The control unit 20 calculates the positional coordinate of the GPS receiver 1 using the GPS satellite signals sent from the receiver unit 10. Particularly, the control unit 20 performs a method of calculating a position according to an embodiment of the invention so as to calculate the accurate positional coordinate of the GPS receiver 1 by removing a reflection error.

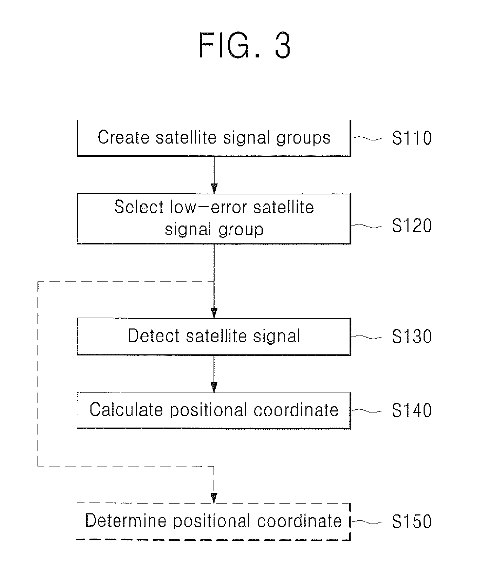

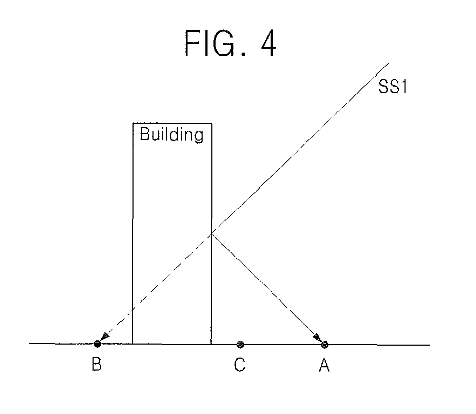

Fig. 3 is a flowchart illustrating the method of calculating a position of a GPS receiver according to an embodiment of the invention and Fig. 4 is a diagram illustrating an error in position calculation due to a reflection error.

In the method of calculating a position of a GPS receiver according to the embodiment of the invention, a GPS satellite signal including a reflection error is detected out of GPS satellite signals received through the use of the receiver unit 10 and the GPS satellite signal including the reflection error is excluded from the calculation of a position of a GPS receiver, whereby it is possible to remove the reflection error and to more accurately calculate the position of the GPS receiver. Hereinafter, the GPS satellite signal including the reflection error can be referred to as a "reflected satellite signal".

Referring to Fig. 3, the method of calculating a position of a GPS receiver according to the embodiment of the invention includes a satellite signal group creating step S110, a low-error satellite signal group selecting step S120, a satellite signal detecting step S 130, and a positional coordinate calculating step S 140. The steps may be performed by the control unit 20 of the GPS receiver 1.

In the satellite signal group creating step S 110, the GPS receiver 1 combines plural GPS satellites signals sent from plural GPS satellites and received through the use of the receiver unit 10 and creates plural satellite signal groups.

The rule for creating plural satellite signal groups, that is, the rule for combining plural satellite signals, is as follows.

First, at least four GPS satellite signals are required for calculating the positional coordinate of the GPS receiver 1, whereby at least four GPS satellite signals can be included in each satellite signal group.

Also, the same number of GPS satellite signals may be included in each satellite signal goup.

For example, when k GPS satellite signals are received, $_kC_m$ satellite signal groups can be created by combining m GPS satellite signals into a single satellite signal group. Here, m is an integer equal to or greater than 4 and k is an integer greater than m.

When the number of combinations used to create the satellite signal groups is excessively great, the calculation on all the combinations requires a lot of computational load, thereby causing a problem in that the calculation time may be extended. In this case, only satellite signal groups having a relatively high accuracy, that is, having a low precision decrease ratio, out of the plural combinations can be selected and participated in the position calculating process to be described later.

The accuracy based on the satellite arrangement can be confirmed using a precision decrease ratio such as a dilution of precision (DOP). The DOP is a dimensionless number representing an error at which the relative geometry of the GPS satellites has an influence on the positioning of the GPS receiver. As the distance between the satellites becomes greater, the positional precision determined by the GPS receiver becomes higher. As the value of the DOP decreases, the GPS satellites are arranged more evenly, thereby increasing the accuracy in the position calculation.

The DOP can be classified into a PDOP (Position DOP), a GDOP (Geometric DOP), a HDOP (Horizontal DOP), VDOP (Vertical DOP), and the like and one or more thereof can be used in the invention.

That is, by combining the GPS satellite signals so as to create satellite signal groups having a relatively low DOP, it is not necessary to perform the position calculation on all the combinations of satellite signal groups and it is thus possible to reduce the computational load and the calculation time.

Hereinafter, as shown in Fig. 2, it is assumed that five GPS satellite signals (the first GPS satellite signal SS1 to the fifth GPS satellite signal SS5) emitted from five GPS satellites (the first GPS satellite T1 to the fifth GPS satellite T5) are received by the GPS receiver 1.

Here, the signal received from the first GPS satellite T1 is defined as a first GPS satellite signal SS1, the signal received from the second GPS satellite T2 is defined as a second GPS satellite signal SS2, the signal received from the third GPS satellite T3 is defined as a third GPS satellite signal SS3, the signal received from the fourth GPS satellite T4 is defined as a fourth GPS satellite signal SS4, and the signal received from the fifth GPS satellite T5 is defined as a fifth GPS satellite signal SS5.

Since the GPS satellite signals include identification information (ID) of the GPS satellites emitting the signals, the control unit 20 of the GPS receiver 1 can identify the GPS satellites corresponding to the respective received GPS satellite signals.

When four out of five GPS satellite signals are selected and combined, 5 ($=_5C_4$) satellite signal groups G1, G2, G3, G4, and G5 can be created as follows.

G1 (SS2, SS3, SS4, SS5)
G2 (SS1, SS3, SS4, SS5)
G3 (SS1, SS2, SS4, SS5)
G4 (SS1, SS2, SS3, SS5)
G5 (SS1, SS2, SS3, SS4)

In the low-error satellite signal group selecting step S120, the control unit 20 selects a low-error satellite signal group using pseudoranges based on the GPS satellite signals included in each satellite signal group. Here, the low-error satellite signal group means a satellite signal group not including a GPS satellite signal causing a reflection error or including the GPS satellite signal causing a reflection error as little as possible.

The pseudoranges mean distances between the GPS satellites emitting the GPS satellite signals included in each satellite signal group and the GPS receiver 1 and are calculated using the time lapsing until a GPS satellite signal is emitted from a GPS satellite and arrives at the GPS receiver 1.

That is, the pseudorange is calculated as the value obtained by multiplying the velocity of a GPS satellite signal by the time lapsing until the GPS satellite signal arrives (the difference between the time of receiving the GPS satellite signal and the time of transmitting the GPS satellite signal) and is different from the actual distance because it includes various error factors.

In order to select the low-error satellite signal group using the pseudoranges, a pseudorange-relevant variable can be calculated through the use of a position calculating method utilizing the pseudoranges based on the GPS satellite signals included in each satellite signal group.

The pseudorange-relevant variable may be one of the predicted positional coordinate of the GPS receiver, the residual of the pseudorange, the correction value, and the deviation between the pseudoranges and the geometric distance which are calculated using the pseudoranges. Other values calculated in the course of typical position calculation are not excluded and can be determined using the maximum value, the minimum value, the average value, and the like depending on the characteristics of the values.

In the following description, it is assumed that the pseudorange-relevant variable calculated for each satellite signal group using the pseudoranges is a positional coordinate (latitude, longitude, and altitude).

In an embodiment of the invention, the predicted positional coordinate is calculated for each satellite signal group using the pseudoranges based on the GPS satellite signals included in the corresponding satellite signal group and the satellite signal group corresponding to the predicted positional coordinate quite different from the other predicted positional coordinates is selected.

The GPS satellite signals included in the satellite signal groups G1 to G5 and the predicted positional coordinates of the GPS receiver calculated for each satellite signal group can be arranged as shown in Table 1.

Table 1

| Type of satellite signal group | First satellite signal goup G1 | Second satellite signal group G2 | Third satellite signal group G3 | Fourth satellite signal goup G4 | Fifth satellite signal group G5 |
|---|---|---|---|---|---|
| GPS satellite signals | SS2 | SS1 | SS1 | SS1 | SS1 |
| | SS3 | SS3 | SS2 | SS2 | SS2 |
| | SS4 | SS4 | SS4 | SS3 | SS3 |
| | SS5 | SS5 | SS5 | SS5 | SS4 |
| Predicted position coordinate of GPS receiver | (x1, y1, z1) | (x2,y2,z2) | (x3, y3, z3) | (x4, y4, z4) | (x5, y5, z5) |

Here, the predicted positional coordinates of the GPS receiver can be calculated using at least one of a least square method or a Kalman filter.

For example, the process of calculating the positional coordinate of the GPS receiver for each satellite signal group on the basis of the least square method and Expression 1 will be described below. For the purpose of convenience, a correction term of an ionosphere or the like will be omitted.

Expression 1

$$P_i = \sqrt{(X_i - X_{gps})^2 + (Y_i - Y_{gps})^2 + (Z_i - Z_{gps})^2}$$

In order to calculate the positional coordinate (Xgps, Ygps, Zgps) of the GPS receiver which is an unknown in Expression 1, the corresponding numerical values are substituted into the pseudorange (Pi) between the i-th GPS satellite and the GPS receiver and the positional coordinate (Xi, Yi, Zi) of the i-th GPS satellite in Expression 1 to create plural equations. The positional coordinate (Xi, Yi, Zi) of the i-th GPS satellite is information included in the GPS satellite signal.

In the above-mentioned example, the following five equations of Expressions 2 to 6 are created for five GPS satellites.

Expression 2

$$P_1 = \sqrt{(X_1 - X_{gps})^2 + (Y_1 - Y_{gps})^2 + (Z_1 - Z_{gps})^2}$$

Expression 3

$$P_2 = \sqrt{(X_2 - X_{gps})^2 + (Y_2 - Y_{gps})^2 + (Z_2 - Z_{gps})^2}$$

Expression 4

$$P_3 = \sqrt{(X_3 - X_{gps})^2 + (Y_3 - Y_{gps})^2 + (Z_3 - Z_{gps})^2}$$

Expression 5

$$P_4 = \sqrt{(X_4 - X_{gps})^2 + (Y_4 - Y_{gps})^2 + (Z_4 - Z_{gps})^2}$$

Expression 6

$$P_5 = \sqrt{(X_5 - X_{gps})^2 + (Y_5 - Y_{gps})^2 + (Z_5 - Z_{gps})^2}$$

Thereafter, the predicted positional coordinate of the GPS receiver is calculated for each satellite signal group.

The predicted positional coordinate (x1, y1, z1) of the GPS receiver in the first satellite signal group G1 can be calculated through the use of the least square method using Expressions 3, 4, 5, and 6, the predicted positional coordinate (x2, y2, z2) of the GPS receiver in the second satellite signal group G2 can be calculated through the use of the least square method using Expressions 2, 4, 5, and 6, the predicted positional coordinate (x3, y3, z3) of the GPS receiver in the third satellite signal group G3 can be calculated through the use of the least square method using Expressions 2, 3, 5, and 6, the predicted positional coordinate (x4, y4, z4) of the GPS receiver in the fourth satellite signal group G4 can be calculated through the use of the least square method using Expressions 2, 3, 4, and 6, and the predicted positional coordinate (x5, y5, z5) of the GPS receiver in the fifth satellite signal group G5 can be calculated through the use of the least square method using Expressions 2, 3, 4, and 5.

Referring to Fig. 4, when the actual position of the GPS receiver is A and a GPS satellite signal (the first satellite signal SS1 in the drawing) is reflected by a building, the position of the GPS receiver based on the GPS satellite signal is calculated to be present in the vicinity of B.

In the satellite signal groups G2, G3, G4, and G5 including the first GPS satellite signal SS1 causing a reflection error, the predicted positional coordinate of the GPS receiver is calculated to converge on the vicinity of C in average..

However, in the satellite signal group G1 not including the first GPS satellite signal SS1, the predicted positional coordinate of the GPS receiver is calculated to be present in the vicinity of A as a position which is substantially equal to the actual position of the GPS receiver or a position which includes only the error components other than the reflection error.

That is, the predicted positional coordinate (x1, y1, z1) based on the first satellite signal group G1 converges on the vicinity ofA, but the predicted positional coordinates (x2, y2, z2) to (x5, y5, z5) based on the other satellite signal groups G2 to G5 are calculated to converge on the vicinity of C.

Therefore, the satellite signal group G1 on the basis of which the predicted positional coordinate different by a predetermined deviation or more from the predicted positional coordinates of the other satellite signal groups is calculated indicates the accurate position of the GPS receiver. As a result, it can be determined that the satellite signal group G1 on the basis of which the predicted positional coordinate different from the other satellite signal groups is calculated does not include the GPS satellite signal SS1 causing the reflection error and the other satellite signal groups G2, G3, G4, and G5 include the GPS satellite signal SS1 causing the reflection error.

More specifically, in comparison with the value calculated for each satellite signal group using the pseudoranges based on the GPS satellite signals included in the corresponding satellite signal group, the satellite signal group having the value quite different from a reference value is selected. Here, the reference value can be set in advance experimentally or statistically.

In the above-mentioned embodiment, an average coordinate of the predicted positional coordinates for the satellite signal groups may be calculated and then the satellite signal group having the predicted positional coordinate of which the deviation from the average coordinate is equal to or greater than the reference value may be selected.

In this case, the average coordinate (xb, yb, zb) can be calculated by Expression 7 and the deviation from the average coordinate (xb, yb, zb) can be acquired using a variance value or the like.

$$\text{Expression 7}$$

$$(xb, yb, zb) = \left( \frac{x1+x2+x3+x4+x5}{5}, \frac{y1+y2+y3+y4+y5}{5}, \frac{z1+z2+z3+z4+z5}{5} \right)$$

Therefore, in the low-error satellite signal group selecting step S120, when the predicted positional coordinate of which the variance value or the like is equal to or greater than a predetermined reference value is present, it is determined that the reflection error is present in the GPS satellite signals used for the whole calculation.

It is determined that the satellite signal group including the predicted positional coordinate of which the deviation such as the variance value is equal to or greater than a reference value does not include the reflection error and the corresponding satellite signal group is selected as the low-error satellite signal group. When the variance value or the like is less than the predetermined reference value, it is determined that the reflection error is not present and the corresponding satellite signal group is not selected as the low-error satellite signal group.

In the above-mentioned example, it is determined that the deviation between the predicted positional coordinate of the first satellite signal group G1 and the average coordinate is equal to or greater than the reference value and thus the first satellite signal group G1 is selected as the low-error satellite signal group.

When the low-error satellite signal group is selected in step S120, the control unit 20 detects the GPS satellite signal causing the reflection error in the satellite signal detecting step S130. Specifically, the GPS satellite signal not included in the selected low-error satellite signal group is detected as the GPS satellite signal causing the reflection error.

When the first satellite signal group G1 is selected in the above-mentioned example, the first satellite signal group G1 does not include the first GPS satellite signal SS 1, and thus the first GPS satellite signal SS1 can be detected as the GPS satellite signal causing the reflection error.

In the positional coordinate calculating step S 140, the control unit 20 calculates the positional coordinate of the GPS receiver using the GPS satellite signals other than the GPS satellite signal detected in the satellite signal detecting step S 130.

That is, the positional coordinate of the GPS receiver is calculated using the GPS satellite signals (the second GPS satellite signal SS2, the third GPS satellite signal SS3, the fourth GPS satellite signal SS4, and the fifth GPS satellite signal SS5) other than the first GPS satellite signal SS1 detected as the GPS satellite signal including the reflection error in the satellite signal detecting step S 130.

Accordingly, it is possible to calculate the positional coordinate of the GPS receiver while removing the GPS satellite signal including the reflection error, thereby acquiring the more accurate position of the GPS receiver.

In the related art, the reflection error is removed by not receiving a reflected signal through the antenna or the like, that is, not including a physically-reflected signal in the calculation, which requires a complicated hardware structure and is not suitable for a mobile device. However, in the above-mentioned embodiments of the invention, the reflection error can be more easily removed by not including a reflected signal in the calculation of a position through the use of a software method.

The case where the number of GPS satellite signals including the reflection error is one has been described, but when the number of GPS satellite signals including the reflection error is two or more, the number of low-error satellite signal groups selected at a time in the satellite signal group selecting step S 120 may be two or more.

In this case, in the satellite signal detecting step S130, the control unit 20 detects plural GPS satellite signals not included in the selected plural low-error satellite signal groups. In the positional coordinate calculating step S 140, the positional coordinate of the GPS receiver can be calculated using only the GPS satellite signals other than the detected plural GPS satellite signals.

A method of calculating a position of a GPS receiver according to another embodiment of the invention may further include a positional coordinate determining step S150 instead of the satellite signal detecting step S130 and the positional coordinate calculating step S 140.

In the positional coordinate determining step S 150, the control unit 20 can determine the predicted positional coordinate calculated using the corresponding satellite signal group in the low-error satellite signal group selecting step S120 as the positional coordinate of the GPS receiver, since the satellite signal group selected in the low-error satellite signal group selecting step S120 is the low-error satellite signal group not including the GPS satellite signal causing the reflection error.

Even when the number of GPS satellite signals (reflected satellite signals) including the reflection error is two or more, it is possible to easily remove the reflected satellite signals.

When k GPS satellite signals are received, it is possible to create $_kC_m$ satellite signal groups by combining m GPS satellite signals into a single satellite signal group. Here, m is an integer equal to or greater than 4 and k is an integer greater than m.

When plural reflected satellite signals are received, m=k-1 is assumed and m GPS satellite signals are combined to create satellite signal groups. When any reflected satellite signal is detected through the above-mentioned processes (steps S110 to S140 or steps S110, S 120, and S150), the detected GPS satellite signal is excluded.

Since the GPS satellite signal causing the reflection error is removed, the total number of GPS satellite signals is decreased by 1 (k=k-1), the number of GPS satellite signals m which should be included in a single satellite signal group is decreased by 1, and then the above-mentioned processes (steps S110 to S140 or steps S110, S 120, and S150) are repeated to additionally detect a reflected satellite signal form the other GPS satellite signals.

According to this method, it is possible to sequentially remove the GPS satellite signals having a relatively great reflection error and to reduce the computational load in comparison with other combination methods.

Hereinafter, it is assumed that the pseudorange-relevant variable calculated for each satellite signal group using the pseudoranges is the deviation between the pseudorange and the geometric distance.

In this embodiment, in the low-error satellite signal group selecting step S120, the distance deviation for each satellite signal group is calculated using the pseudoranges based on the GPS satellite signals included in the respective satellite signal groups and the satellite signal group having the smallest (minimum) distance deviation is determined or detected.

For this purpose, the pseudoranges, the positional coordinates of the GPS satellites, and the predicted positional coordinate of the GPS receiver for each satellite signal group are calculated.

For example, when it is assumed that five GPS satellites (the first GPS satellite T1 to the fifth GPS satellite T5) are observed, the pseudorange P1 between the first GPS satellite T1 and the GPS receiver, the pseudorange P2 between the second GPS satellite T2 and the GPS receiver, the pseudorange P3 between the third GPS satellite T3 and the GPS receiver, the pseudorange P4 between the fourth GPS satellite T4 and the GPS receiver, and the pseudorange P5 between the fifth GPS satellite T5 and the GPS receiver are calculated.

Since orbit information is included in the GPS satellite signals emitted from the corresponding GPS satellites, it is possible to calculate the positional coordinates of the GPS satellites with reference thereto.

The methods of calculating the pseudoranges between the GPS satellites and the GPS receiver and the positional coordinates of the GPS satellites can employ known methods.

The predicted positional coordinate of the GPS receiver for each satellite signal group can be calculated using the GPS satellite signals included in the corresponding satellite signal group. As described above, the predicted positional coordinate of the GPS receiver can be calculated using the least square method, the Kalman filter, or the like.

When the determination is performed on the basis of the positional accuracy expressed by the deviation between the pseudorange and the geometric distance, it is not necessary to calculate the average coordinate and the variance values, unlike the above-mentioned embodiments.

For example, the difference between the pseudorange and the geometric distance in the first satellite signal group G1 can be calculated as follows.

Since the first satellite signal group G1 includes the second GPS satellite signal SS2, the third GPS satellite signal SS3, the fourth GPS satellite signal SS4, and the fifth satellite signal SS5, four pseudoranges P2, P3, P4, and P5 between the second GPS satellite T2, the third GPS satellite T3, the fourth GPS satellite T4, and the fifth GPS satellite T5 and the GPS receiver 1 are calculated.

In addition, four positional coordinates (Xi, Yi, Zi) (where i is the GPS satellite number) of the second GPS satellite T2, the third GPS satellite T3, the fourth GPS satellite T4, and the fifth GPS satellite T5 are calculated.

A single predicted positional coordinate (x1, y1, z1) of the GPS receiver 1 is calculated using the GPS satellite signals SS2, SS3, SS4, and SS5 included in the first satellite signal group G1.

Since the geometric distance is defined as a distance between the GPS satellites and the predicted positional coordinate calculated for each satellite signal group, the geometric distance is set to the difference between the positional coordinate (Xi, Yi, Zi) of each GPS satellite (the positional coordinate of the i-th GPS satellite) and the predicted positional coordinate (x1, y1, z1) of the GPS receiver 1.

The deviation A between the pseudorange and the geometric distance can be expressed by Expression 8.

## Expression 8

$$A = Pi - \sqrt{(Xi - x1)^2 + (Yi - y1)^2 + (Zi - z1)^2}$$

Since the first satellite signal group G1 includes four GPS satellite signals, four deviations between the pseudorange and the geometric distance are calculated. Although not described separately, four deviations between the pseudorange and the geometric distance are calculated for each of the other satellite signal groups G2, G3, G4, and G5.

For comparison with the deviations between the pseudorange and the geometric distance calculated for the other satellite signal groups, it is necessary to take a representative value for each satellite signal group. Accordingly, the maximum value or the average value out of at least four deviations between the pseudorange and the geometric distance calculated for each satellite signal group may be taken as the representative value or a value obtained by squaring the deviations and adding the resultant may be taken as the representative value.

Thereafter, in the low-error satellite signal group selecting step S120, a satellite signal group having the smallest value out of the distance deviation representative values (the representative value of at least four deviations between the pseudorange and the geometric distance calculated for any satellite signal group) calculated for the satellite signal groups is selected as the low-error satellite signal group.

The concept of accuracy described above is associated with the precision decrease ratio such as the DOP and is used to determine the accuracy of the calculation result by squaring the differences between the geometric distance (theoretical value) and the pseudorange (measured value) of the GPS satellites included in the calculation and normalizing the squared values. The accuracy of the satellite signal group in which a greater distance is present between the GPS satellites emitting the GPS satellite signals has a smaller value.

Therefore, the distance deviation representative value in this embodiment is a value indicating the positional error with a concept similar to that of the DOP. It means that the GPS satellite signal causing the reflection error is not present in the satellite signal group having the smallest value.

In other words, in the method of calculating a position using the positional coordinate out of the pseudorange-relevant variables, the satellite signal group having quite different from the values of the other satellite signal groups is the satellite signal group not including the reflection error. In the method of calculating a position using the distance deviation representative value out of the pseudorange-relevant variables, the distance deviation representative value of the satellite signal group including the reflection error is the minimum.

The subsequent steps (the satellite signal detecting step S 130 and the positional coordinate calculating step S140) are the same as described above and the description thereof will not be repeated.

On the other hand, the methods of calculating the position of a GPS receiver according to the above-mentioned embodiments may be embodied as a program and may be stored in a computer-readable recording medium. Examples of the recording medium include electronic/magnetic/optical/electromagnetic/infrared/semiconductor systems, apparatuses, and devices, and wave carriers, but the recording medium is not limited to these examples. Specific examples of the recording medium include a computer diskette (magnetic), a random access memory (RAM) (electronic), a read only memory (ROM) (electronic), an erasable programinable read only memory (EPROM, EEPROM, or flash memory) (electronic), an optical fiber (optical), and an optical medium such as a DVD (Digital Versatile Disc) or a CDROM (Compact Disc Read Only Memory). The program stored in the computer-readable recording medium may be distributed in computer systems connected via a network and may be stored and executed in computer-readable codes in a distributed manner.

The recording medium may be a sheet of paper on which the program is printed or other suitable media. This program may be electronically captured through the optical scanning of the sheet of paper or the other suitable media, may be compiled, or interpreted, or processed through an appropriate method if necessary, and then may be stored in a computer memory.

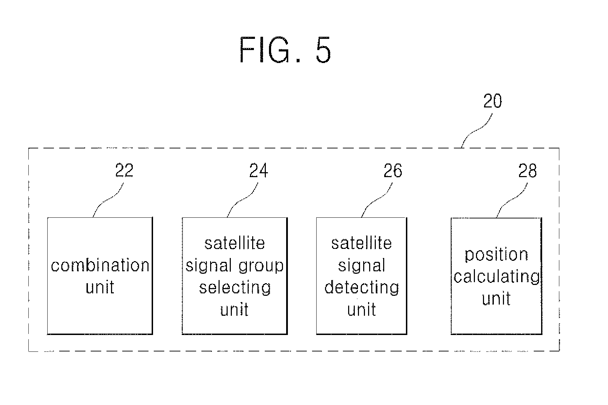

Fig. 5 is a block diagram schematically illustrating the constitution of a control unit of a GPS receiver according to an embodiment of the invention.

The constitution of the GPS receiver performing the above-mentioned position calculating method will be described below with reference to Fig. 5. The same as described in the above-mentioned embodiments will not be repeated.

The GPS receiver 1 according to an embodiment of the invention includes a combination unit 22, a satellite signal group selecting unit 24, a satellite signal detecting unit 26, and a position calculating unit 28.

The combination unit 22 combines plural GPS satellite signals received through the receiver unit 10 to create plural satellite signal groups. That is, the combination unit 22 performs the satellite signal group creating step S110.

The satellite signal group selecting unit 24 selects a low-error satellite signal group not including a reflection error or including the reflection error as little as possible using the pseudoranges based on the GPS satellite signals included in each satellite signal group created by the combination unit 22. That is, the satellite signal group selecting unit 24 performs the low-error satellite signal group selecting step S 120.

The satellite signal detecting unit 26 detects the GPS satellite signal other than the plural GPS satellite signals included in the low-error satellite signal group selected by the satellite signal group selecting unit 24 as a reflected satellite signal which is the GPS satellite signal including the reflection error. The satellite signal detecting unit 26 performs the satellite signal detecting step S 130.

The position calculating unit 28 calculates the positional coordinate of the GPS receiver using the GPS satellite signals other than the GPS satellite signal detected to include the reflection error by the satellite signal detecting unit 26. That is, the position calculating unit 28 performs the positional coordinate calculating step S 140.

Alternatively, when a predicted positional coordinate of the GPS receiver calculated in advance for the low-error satellite signal group selected by the satellite signal group selecting unit 24 is present, the position calculating unit 28 may finally determine the predicted positional coordinate as the positional coordinate of the GPS receiver.

The combination unit 22, the satellite signal group selecting unit 24, the satellite signal detecting unit 26, and the position calculating unit 28 have been described to be separate from each other for the purpose of convenience, but may be embodied by a single control unit 20 such as a central processing unit (CPU).

While the invention is described with reference to the embodiments, it will be understood by those skilled in the art that the invention can be modified and changed in various forms without departing from the concept and scope of the invention described in the appended claims. Therefore, it should be understood that the above-mentioned embodiments are exemplary but not definite. The scope of the invention is expressed by the appended claims rather than the above detailed description and it should be understood that the invention includes all the changes and modifications derived from the meanings, scopes, and equivalents of the claims.

**Claims**

1. A method of calculating a position of a GPS receiver, comprising the steps of:

    causing a control unit to combine a plurality of satellite signals received through the use of a receiver unit and to create a plurality of satellite signal groups;
    selecting a low-error satellite signal group not including any GPS satellite signal causing a reflection error or including the GPS satellite signal causing a reflection error as little as possible by the use of pseudoranges based on the GPS satellite signals included in the satellite signal groups;
    detecting the GPS satellite signal not included in the low-error satellite signal group as a reflected satellite signal; and

calculating a positional coordinate of the GPS receiver by the use of the GPS satellite signals other than the reflected satellite signal.

2. The method of calculating a position of a GPS receiver according to claim 1, wherein the step of creating a plurality of satellite signal groups includes creating $_kC_m$ satellite signal groups by combining m GPS satellite signals into a signal satellite signal group when k GPS satellite signals are received, where m is an integer equal to or greater than 4 and k is an integer greater than m.

3. The method of calculating a position of a GPS receiver according to claim 1, wherein the step of creating a plurality of satellite signal groups includes combining the plurality of GPS satellite signals so as to create satellite signal groups having a relatively low DOP (Dilution Of Precision).

4. The method of calculating a position of a GPS receiver according to claim 1, wherein the step of selecting a low-error satellite signal group includes selecting the low-error satellite signal group on the basis of a calculation result of a pseudorange-relevant variable including at least one of a predicted positional coordinate of the GPS receiver, a residual of the pseudoranges, a correction value, and a deviation between the pseudorange and a geometric distance which are calculated using the pseudoranges.

5. The method of calculating a position of a GPS receiver according to claim 4, wherein when the pseudorange-relevant variable is the predicted positional coordinate, the step of selecting a low-error satellite signal group includes calculating the predicted positional coordinate for each of the satellite signal groups using the pseudoranges based on the GPS satellite signals included in the corresponding satellite signal group and selecting the satellite signal group corresponding to the predicted positional coordinate quite different from the other predicted positional coordinates as the low-error satellite signal group.

6. The method of calculating a position of a GPS receiver according to claim 5, wherein the step of selecting a low-error satellite signal group includes calculating an average coordinate of the predicted positional coordinates corresponding to the satellite signal groups and selecting the satellite signal group having the predicted positional coordinate of which the deviation from the average coordinate is equal to or greater than a reference value as the low-error satellite signal group.

7. The method of calculating a position of a GPS receiver according to claim 4, wherein when the pseudorange-relevant variable is the deviation between the pseudorange and the geometric distance, the step of selecting a low-error satellite signal group includes calculating a representative value of a distance deviation for the GPS satellite signals included in each satellite signal group and selecting the satellite signal group of which the representative value of the distance deviations is the minimum as the low-error satellite signal group.

8. The method of calculating a position of a GPS receiver according to claim 1, wherein when a plurality of GPS satellite signals including the reflection error are present, the step of selecting a low-error satellite signal group includes selecting a plurality of low-error satellite signal groups at a time, and the step of detecting the reflected satellite signal includes detecting a plurality of GPS satellite signals not included in the plurality of low-error signal groups as the reflected satellite signal.

9. A method of calculating a position of a GPS receiver, comprising the steps of:

causing a control unit to combine a plurality of satellite signals received through the use of a receiver unit and to create a plurality of satellite signal groups;
selecting a low-error satellite signal group not including any GPS satellite signal causing a reflection error by the use of pseudoranges based on the GPS satellite signals included in the satellite signal groups; and
calculating a predicted positional coordinate calculated on the basis of the low-error satellite signal group as a positional coordinate of the GPS receiver.

10. The method of calculating a position of a GPS receiver according to claim 9, wherein the step of selecting a low-error satellite signal group includes calculating the predicted positional coordinate for each of the satellite signal groups using the pseudoranges based on the GPS satellite signals included in the corresponding satellite signal group and selecting the satellite signal group corresponding to the predicted positional coordinate quite different from the other predicted positional coordinates as the low-error satellite signal group.

11. The method of calculating a position of a GPS receiver according to claim 10, wherein the step of selecting a low-error satellite signal group includes calculating an average coordinate of the predicted positional coordinates corresponding to the satellite signal groups and selecting the satellite signal group having the predicted positional coordinate of which the deviation from the average coordinate is equal to or greater than a reference value as the low-error satellite signal group.

12. A GPS receiver comprising:

a combination unit that combines a plurality of GPS satellite signals received through the use of a receiver unit and that creates a plurality of satellite signal groups;
a satellite signal group selecting unit that selects a low-error satellite signal group not including any GPS satellite signal causing a reflection error or including the GPS satellite signals as little as possible using pseudoranges based on the GPS satellite signals included in each of the satellite signal groups;
a satellite signal detecting unit that detects the GPS satellite signal not included in the low-error satellite signal group as a reflected satellite signal; and
a position calculating unit that calculates a positional coordinate of the GPS receiver using the GPS satellite signals other than the reflected satellite signal.

13. The GPS receiver according to claim 12, wherein the combination unit creates $_kC_m$ satellite signal groups by combining m GPS satellite signals into a signal satellite signal group when k GPS satellite signals are received, where m is an integer equal to or greater than 4 and k is an integer greater than m.

14. The GPS receiver according to claim 12, wherein the combination unit combines the plurality of GPS satellite signals so as to create satellite signal groups having a relatively low DOP (Dilution Of Precision).

15. The GPS receiver according to claim 12, wherein the satellite signal group selecting unit selects the low-error satellite signal group on the basis of a calculation result of a pseudorange-relevant variable including at least one of a predicted positional coordinate of the GPS receiver, a residual of the pseudoranges, a correction value, and a deviation between the pseudorange and a geometric distance which are calculated using the pseudoranges.

16. The GPS receiver according to claim 15, wherein when the pseudorange-relevant variable is the predicted positional coordinate, the satellite signal group selecting unit calculates the predicted positional coordinate for each of the satellite signal groups using the pseudoranges based on the GPS satellite signals included in the corresponding satellite signal group and selects the satellite signal group corresponding to the predicted positional coordinate quite different from the other predicted positional coordinates as the low-error satellite signal group.

17. The GPS receiver according to claim 16, wherein the satellite signal group selecting unit calculates an average coordinate of the predicted positional coordinates corresponding to the satellite signal groups and selects the satellite signal group having the predicted positional coordinate of which the deviation from the average coordinate is equal to or greater than a reference value as the low-error satellite signal group.

18. The GPS receiver according to claim 15, wherein when the pseudorange-relevant variable is the deviation between the pseudorange and the geometric distance, the satellite signal group selecting unit calculates a representative value of a distance deviation for the GPS satellite signals included in each satellite signal group and selects the satellite signal group of which the representative value of the distance deviations is the minimum as the low-error satellite signal group.

19. The GPS receiver according to claim 12, wherein when a plurality of GPS satellite signals including the reflection error are present, the satellite signal group selecting unit selects a plurality of low-error satellite signal groups at a time, and the satellite signal detecting unit detects a plurality of GPS satellite signals not included in the plurality of low-error signal groups as the reflected satellite signal.

20. A GPS receiver comprising:

a combination unit that combines a plurality of satellite signals received through the use of a receiver unit and that creates a plurality of satellite signal groups;
a satellite signal group selecting unit that selects a low-error satellite signal group not including any GPS satellite signal causing a reflection error by the use of pseudoranges based on the GPS satellite signals included in the satellite signal groups; and

a position calculating unit that calculates a predicted positional coordinate calculated on the basis of the low-error satellite signal group as a positional coordinate of the GPS receiver.

21. The GPS receiver according to claim 20, wherein the satellite signal group selecting unit calculates the predicted positional coordinate for each of the satellite signal groups using the pseudoranges based on the GPS satellite signals included in the corresponding satellite signal group and selects the satellite signal group corresponding to the predicted positional coordinate quite different from the other predicted positional coordinates as the low-error satellite signal group.

22. The GPS receiver according to claim 21, wherein the satellite signal group selecting unit calculates an average coordinate of the predicted positional coordinates corresponding to the satellite signal groups and selects the satellite signal group having the predicted positional coordinate of which the deviation from the average coordinate is equal to or greater than a reference value as the low-error satellite signal group.

23. The GPS receiver according to claim 22, wherein the satellite signal group selecting unit calculates an average coordinate of the predicted positional coordinates corresponding to the satellite signal groups and selects the satellite signal group having the predicted positional coordinate of which the deviation from the average coordinate is equal to or greater than a reference value as the low-error satellite signal group.

# FIG. 1

# FIG. 2

# FIG. 3

Create satellite signal groups — S110

Select low-error satellite signal group — S120

Detect satellite signal — S130

Calculate positional coordinate — S140

Determine positional coordinate — S150

# FIG. 4

SS1

Building

B          C          A

# FIG. 5

20

22

combination
unit

24

satellite
signal group
selecting
unit

26

satellite
signal
detecting
unit

28

position
calculating
unit

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20110041211 A